(19) Europäisches Patentamt
European Patent Office
Office européen des brevets

(11) EP 3 059 274 B1

(12) **EUROPEAN PATENT SPECIFICATION**

(45) Date of publication and mention of the grant of the patent:
**06.06.2018 Bulletin 2018/23**

(21) Application number: **14853796.2**

(22) Date of filing: **16.10.2014**

(51) Int Cl.:
***C08H 7/00*** *(2011.01)* ***C08K 3/00*** *(2018.01)*
***C08L 1/02*** *(2006.01)* ***C08L 9/00*** *(2006.01)*
***C08L 97/00*** *(2006.01)*

(86) International application number:
**PCT/JP2014/077608**

(87) International publication number:
**WO 2015/056758 (23.04.2015 Gazette 2015/16)**

(54) **RESIN COMPOSITION AND RUBBER COMPOSITION**

HARZZUSAMMENSETZUNG UND KAUTSCHUKZUSAMMENSETZUNG

COMPOSITION DE RÉSINE ET COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2013 JP 2013215145**

(43) Date of publication of application:
**24.08.2016 Bulletin 2016/34**

(73) Proprietor: **Sumitomo Bakelite Co., Ltd.**
**Shinagawa-ku**
**Tokyo 140-0002 (JP)**

(72) Inventor: **MURAI, Taketoshi**
**Tokyo 140-0002 (JP)**

(74) Representative: **Ter Meer Steinmeister & Partner**
**Patentanwälte mbB**
**Nymphenburger Straße 4**
**80335 München (DE)**

(56) References cited:
**EP-A1- 2 642 150**
**CN-A- 103 756 060**
**JP-A- 2004 352 978**
**JP-A- 2008 285 626**
**JP-A- 2009 079 198**
**JP-A- 2011 032 493**
**JP-A- 2012 229 330**
**JP-A- 2014 055 215**
**US-A1- 2005 027 043**
**US-A1- 2011 098 384**

- **TON THAT MINH TAN: 'Cardanol-lignin-based polyurethanes' POLYMER INTERNATIONAL vol. 41, no. 1, 1996, pages 13 - 16, XP055333663**
- **TON THAT MINH TAN: 'Cardanol-lignin-based epoxy resins: synthesis and characterization' JOURNAL OF POLYMER MATERIALS vol. 13, no. 3, 1996, pages 195 - 199, XP008183357**

EP 3 059 274 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a resin composition obtained by using a lignin derivative, and a rubber composition obtained by using the resin composition.

### Background Art

Most of wood-based waste materials (biomass) such as barks, thinnings, and construction waste materials have been disposed of so far. The protection of the global environment, however, has become an important issue, and from this viewpoint, studies have started regarding reuse and recycle of wood-based waste materials.

Principal components of common woods are cellulose derivatives, hemicellulose derivatives, and lignin derivatives.

Among these, lignin, which is contained at a ratio of about 30 %, has a structure containing aromatic rings plentifully, and hence, resin compositions, tires, and the like in which lignin is used as a resin raw material have been disclosed (see, for example, Patent Documents 1 and 2).

Further, as the lignin derivatives have a highly polar structure containing a phenolic hydroxyl group and an alcoholic hydroxyl group plentifully, compositions and tires in which the same are used as a tackifier and an antioxidant have been disclosed (see, for example, Patent Document 3), and further, the lignin derivatives are expected to perform as a reinforcer for the rubber compositions.

### Prior Art Document

### Patent Document

[Patent Document 1] JP-T-2011-522085
[Patent Document 2] JP-A-2008-285626
[Patent Document 3] JP-T-2012-229330
[Patent Document 4] JP-A-2004-352978

## SUMMARY OF THE INVENTION

### Problem to be Solved by the Invention

In a case where, however, a lignin derivative is dissolved in black liquor containing sodium hydroxide and sodium sulfide, and the lignin derivative is collected from the black liquor in which the lignin derivative is dissolved, the lignin derivative has poor hot melt properties, and therefore is not suitable for molding processing in some cases. Further, a rubber composition in which the obtained lignin derivative is formulated has a reduced mechanical strength (see, for example, Patent Document 1).

A case of lignophenol to which phenol obtained by treating phenol and concentrated sulfuric acid is added is also considered (see, for example, Patent Document 2), but since containing much phenol, such lignophenol has a low degree of plant derivation.

Further, Patent Document 2 discloses systems in which various lignophenol derivatives are used, but the systems do not have sufficient properties as rubber compositions.

A phenolized biomass resin modified with vegetable oil or the like, which has been disclosed (for example, Patent Document 4), contains much phenol, and therefore has a low degree of plant derivation. Besides, since the phenolized biomass resin contains a lot of aliphatic components such as cellulose, there is a risk that the heat-resisting properties and the mechanical strength that lignin has are reduced. Still further, the disclosure does not mention the rubber reinforcing effect.

In this way, it is difficult to obtain a high rubber reinforcing effect by using a lignin derivative, and furthermore, it is more difficult to excellently achieve both of a high degree of plant derivation and a high rubber reinforcing effect. In a case where a molded article is to be obtained, the use of a lignin derivative makes molding difficult, and decreases the mechanical strength, in some cases.

The present disclosure relates to the provision of lignin modified with a plant-derived compound, thereby providing modified lignin having excellent curability and a high rubber reinforcing effect. Additionally, it is an object of the

present invention to provide a rubber composition that achieves improvement of molding properties or a modulus of elasticity while maintaining a high degree of plant derivation, and to provide a resin composition that has excellent molding properties and mechanical strength while maintaining a high degree of plant derivation.

Means for Solving the Problem

The present disclosure relates to the following.

(1) A modified lignin derivative obtained by modifying a lignin derivative with a plant-derived compound.
(2) The modified lignin derivative according to (1), wherein the plant-derived compound contains one or more selected from the group consisting of a substance containing a phenol structure, a substance containing rosin acid, and a substance having an unsaturated bond.
(3) The modified lignin derivative according to (2), wherein the substance containing a phenol structure includes at least one selected from cashew oil, sumac extract, cardanol, cardol, methyl cardol, anacardic acid, urushiol, laccol, thitsiol, and purification products of the same.
(4) The modified lignin derivative according to (2) or (3), wherein the substance containing rosin acid includes at least one selected from terpene oil, tall oil, gum rosin, wood rosin, and purification products of the same.
(5) The modified lignin derivative according to any one of (2) to (4), wherein the substance having an unsaturated bond includes at least one selected from tung oil, linseed oil, mustard oil, perilla oil, walnut oil, egoma oil, safflower oil, sunflower oil, and purification products of the same.
(6) The modified lignin derivative according to any one of (1) to (5), obtained by modification using 0.01 to 300 parts by weight of the plant-derived compound with respect to 100 parts by weight of the lignin derivative.
(7) The modified lignin derivative according to any one of (1) to (6), obtained by modifying the lignin derivative with the plant-derived compound and a phenol.
(8) The modified lignin derivative according to any one of (1) to (7), wherein the lignin derivative has a number average molecular weight of 200 to 5000 expressed in terms of polystyrene, determined by gel permeation chromatography (GPC) analysis.
(9) The modified lignin derivative according to any one of (1) to (8), wherein the lignin derivative has a softening point of 200°C or below.
(10) The modified lignin derivative according to any one of (1) to (8), for rubber reinforcement, or for use in a molding material.
(11) A resin composition containing the modified lignin derivative according to any one of (1) to (10).
(12) A rubber composition containing the modified lignin derivative according to any one of (1) to (10), and diene-based rubber.
(13) The rubber composition according to (12), further containing a filler.
(14) The rubber composition according to (13), wherein the filler contains at least one selected from the group consisting of at least carbon black, silica, alumina, and cellulose fiber.
(15) A cured article obtained by curing the rubber composition according to any one of (12) to (14).
(16) A molding material containing the modified lignin derivative according to any one of (1) to (10).

Effect of the Invention

The present invention makes it possible to develop lignin modified with a plant-derived compound, thereby providing a modified lignin having excellent curability, and additionally, a high rubber reinforcing effect. Further, the present invention makes it possible to provide a resin composition that has excellent molding properties and mechanical strength while maintaining a high degree of plant derivation, or a rubber composition that achieves improvement of a modulus of elasticity.

Mode for Carrying out the Invention

The modified lignin derivative of the present disclosure is characterized in being obtained by modifying a lignin derivative with a plant-derived compound, and the addition (introduction) of the phenol structure is achieved by bonding the lignin derivative and the phenol containing compound by chemical bond.
Hereinafter, the components of the resin composition are described one by one.

<Lignin derivative (A)>

First of all, the lignin derivative is described. Lignin is a principal component that forms a skeleton of a plant

body that exists as lignocellulose, together with cellulose and hemicellulose, and is one of substances that exist most abundantly in the natural world. Among these, a lignin derivative is a compound that includes a phenol derivative as a unit structure, and since having a carbon-carbon bond or a carbon-oxygen-carbon bond, which is chemically and biologically stable, this unit structure is hardly subjected to chemical deterioration or biodegradation. A lignin derivative, therefore, is useful as a resin raw material.

The lignin derivative used in the present invention is obtained by decomposing biomass. A biomass, which is a plant or a plant finished product, is formed by taking in carbon dioxide in the atmosphere and fixing the same in the photosynthesis process, and therefore contributes to suppression of increase of carbon dioxide in the atmosphere. Industrial utilization of biomass, therefore, contributes to suppression of global warming.

Examples of a treatment method used in the present invention for decomposing a biomass so as to obtain the lignin derivative include the following: the method of chemically treating a plant or a plant finished product; the method of hydrolyzing the same; the methods of treating the same by steam blasting, the supercritical water treatment, the subcritical water treatment, mechanical processing, and the cresol sulfate treatment; and the methods of obtaining the lignin derivative as by-products in the pulp production and the biofuel production. From the viewpoint of load on the environment, the steam blasting, the supercritical water treatment, the subcritical water treatment, and the mechanically processing are preferable. From the viewpoint of purity of the lignin derivative obtained, the steam blasting, and the subcritical water treatment are further preferable.

Specific examples of the lignin derivative include those of: a guaiacylpropane structure represented by Formula (1) shown below; a syringylpropane structure represented by Formula (2) shown below: and a 4-hydroxy phenyl propane structure represented by Formula (3) shown below. It should be noted that from coniferous trees, those of the guaiacylpropane structure are principally extracted; from broadleaf trees, those of the guaiacylpropane structure and the syringylpropane structure are principally extracted; from hervage, those of the guaiacylpropane structure, the syringylpropane structure, and the 4-hydroxy phenyl propane structure are principally extracted.

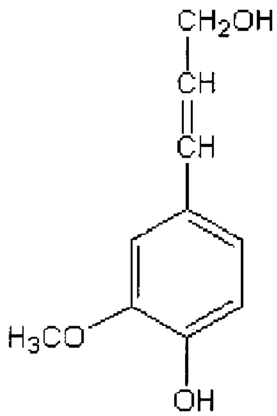

(1)

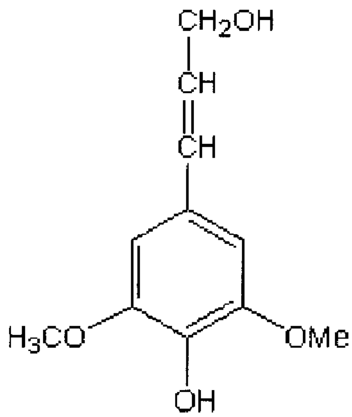

(2)

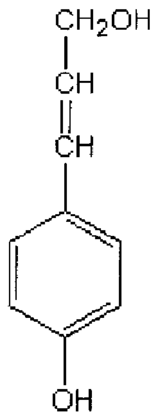

(3)

Further, as the lignin derivative in the present invention, those in which at least one of the ortho position and the para position of the aromatic ring with respect to the hydroxyl group is unsubstituted are preferable. Such a lignin derivative includes many reaction sites on which a curing agent acts due to an electrophilic substitution reaction with respect to the aromatic ring, which reduces steric hindrance in reaction at a hydroxyl group; therefore, the lignin derivative has excellent reactivity.

Here, the lignin derivative, containing a compound having a lignin skeleton as a principal component, may contain a lignin decomposition product, a cellulose decomposition product, and a hemicellulose decomposition product.

Further, other than the above-described basic structure, the lignin derivative may be a lignin derivative having a functional group (a lignin secondary product).

The functional group that the lignin secondary product has is not limited particularly, but for example, two or more same functional groups that react with each other, or a functional group that can react with another functional group are preferable. More specifically, examples of such a functional group include, other than the epoxy group and the methylol group, the following: vinyl group, ethynyl group, maleimide group, cyanate group, isocyanate group, and the like, having a carbon-carbon unsaturated bond. Among these, a lignin derivative to which a methylol group is introduced (methylolated) is preferably used. In such a lignin secondary product, self-crosslinking occurs due to self-condensation reaction between methylol groups, and at the same time, crosslinking further occurs with respect to an alkoxy

methyl group and a hydroxyl group in a crosslinking agent described below. Consequently, a cured article having a particularly homogeneous and rigid skeleton and excellent solvent resistance can be obtained.

The number average molecular weight of the lignin derivative in the present invention is not limited particularly, but the lignin derivative preferably has a number average molecular weight of 200 to 5000, and more preferably, 300 to 3000, expressed in terms of polystyrene, determined by gel permeation chromatography, since in such a case the workability in the normal modification step is improved. A modified lignin derivative obtained by modification with use of a lignin derivative having such a number average molecular weight excellently achieves both of the reactivity (curability), as well as fusibility and solubility. A resin composition is therefore obtained that excellently achieves both of solvent resistance after being cured and moldability.

The following describes an exemplary method for measuring a molecular weight by the gel permeation chromatography.

The lignin derivative in the present invention is dissolved in a solvent, whereby a measurement sample is prepared. The solvent used herein is not particularly limited, and may be any one as long as the lignin derivative can be dissolved therein. From the viewpoint of the measurement accuracy of gel permeation chromatography, for example, tetrahydrofuran is preferable.

Next, "TSKgelGMHXL (manufactured by Tosoh Corporation)", which is an organic generic column filled with a styrene-based polymer filler, and "G2000HXL (manufactured by Tosoh Corporation)", are connected in series to a GPC system "HLC-8320GPC (manufactured by Tosoh Corporation)".

Into this GPC system, 200 μL of the above-described measurement sample is charged, and at 40°C, tetrahydrofuran as an eluent is expanded at a rate of 1.0 mL/min, so that a retention time is measured by using a differential refractive index (RI) and an ultraviolet absorbance (UV). From a calibration curve, prepared separately, indicating the relationship between a standard polystyrene retention time and a molecular weight, the number average molecular weight of the lignin derivative can be calculated.

The molecular weight of standard polystyrene used for creating the calibration curve is not particularly limited, and a standard polystyrenes (manufactured by Tosoh Corporation) having a number average molecular weight of 427000, 190000, 96400, 37900, 18100, 10200, 5970, 2630, 1050, or 500, for example, can be used.

Further, the lignin derivative in the present invention has a carboxyl group in some cases. In the case where the lignin derivative has the above-described carboxyl group, the carboxyl group is crosslinked with a crosslinking agent described below in some cases, which causes the number of crosslinking points to increase, thereby causing the crosslinking density to improve, which results in excellent solvent resistance. Besides, the carboxyl group works as a catalyst of a crosslinking agent in some cases, and is therefore capable of promoting the crosslinking reaction between the lignin derivative and the crosslinking agent, which results in excellent solvent resistance and excellent curing rate.

In the case where the above-described lignin derivative has a carboxyl group, the carboxyl group can be confirmed, when the lignin derivative is subjected to $^{13}C$-NMR analysis attributing to the carboxyl group, by the presence/absence of peak of absorption in a range of 172 to 174 ppm.

The softening point of the lignin derivative of the present invention is not limited particularly, but it is preferably at 200°C or below, since in such a case workability in the normal modifying step is improved. The softening point is further limited as follows when the lower limit thereof is defined as well: the softening point is preferably in a range of 80°C to 160°C, more preferably in a range of 85°C to 150°C, and further preferably in a range of 90°C to 140°C. If the softening point is below the above-described range, the lignin derivative has too high hot melt properties and too high fluidity, which causes many burrs to occur upon molding; and further, since the lignin derivative has poor handleability when it is formed into a resin composition and a rubber composition, much loss occurs in the manufacture of the same in some cases. Besides, if the softening point is above the above-described range, the lignin derivative has poor hot melt properties and poor fluidity, and cannot be molded in some cases. The softening point can be changed by controlling the volatile component amount within a certain range, controlling the average molecular weight of the lignin derivative depending on the decomposition temperature of the biomass, and replacing a part of the lignin derivative with other resin components. It should be noted that even if the lignin derivative of the present invention contains a solvent-insoluble component as a part thereof, the lignin derivative can be formed into a resin composition and a rubber composition similarly, within the above-described range.

The method for measuring the softening point was in accordance with JIS K2207, in which a ring and ball softening point tester (manufactured by Meltec Corporation, ASP-MG2 type) was used.

In a case where the lignin derivative obtained by decomposing biomass is used as a resin composition of the present invention, a lot of low-molecular-weight components are mixed therein in some cases, which causes generation of volatile matters and odor upon heating, as well as lowering of the softening point in some cases. These can be used without any change, or alternatively, these can be removed by heating, drying, etc. of the lignin derivative, whereby the softening point and the odor thereof can be controlled.

<Plant-derived compound>

The "plant-derived compound" used in the present invention refers to a plant-derived component such as a substance containing a phenol structure, a substance containing rosin acid, or an oil having an unsaturated bond.

The "substance containing a phenol structure" refers to cashew oil, sumac extract, cardanol, cardol, methyl cardol, anacardic acid, urushiol, laccol, thitsiol, and purification products of the same. The "substance containing rosin acid" refers to terpene oil, tall oil, gum rosin, wood rosin, and purification products of the same. Further, the "oil having an unsaturated bond" refers to tung oil, linseed oil, mustard oil, perilla oil, walnut oil, egoma oil, safflower oil, sunflower oil, and purification products of the same.

As the plant-derived substance, a substance containing at least one selected from these can be used.

Particularly, in the present invention, the plant-derived compound used in the modification is preferably biomass-derived tung oil, linseed oil, tall oil, and cashew oil from the viewpoint of practical application. Besides, since a vegetable oil contains an aliphatic acid having a long chain alkyl group or a rosin acid-based compound, in a case where the vegetable oil is used in a molding material, particularly in a case where the vegetable oil is used as a binding agent, as is the case with a friction material, or a casting metal, excellent molding properties are achieved. Further, in a case where the same is formulated in rubber, excellent compatibility with rubber and excellent workability of rubber can be achieved. Similarly, since the cashew oil contains cardanol and cardol as phenol compounds having a long chain alkenyl group, when being used as a modifying agent of a lignin derivative, a lignin derivative in which a long chain alkyl group or alkenyl group exists can be obtained. When being formulated with rubber, the cashew oil has excellent compatibility with rubber, and exhibits effects of improving the modulus of elasticity, and the like. Further, in a case where the cashew oil is used in a molding material, it imparts moldability, and at the same time, since it is a phenol compound that is a reaction point of a crosslinking agent and has an unsaturated bond of an alkenyl group, mechanical strength is increased.

<Aldehyde>

In the present invention, the modification can be performed with use of aldehyde, etc., that can react with lignin and/or a phenol-structure-containing compound. As a catalyst, an acid catalyst that causes modification into a novolac type, or an alkali catalyst that causes modification into a resole type, is used, and since a novolac type has excellent preservation properties, the modification with use of an acid catalyst is desired. As aldehyde, the following can be used, for example: formaldehyde, acetaldehyde, and paraformaldehyde. As a compound that can cause addition of phenol thereby modifying the same, similarly, the following can be used, for example: saccharides, furfural, and furfuryl alcohol.

<Method for synthesizing modified lignin derivative>

The method for synthesizing the above-described modified lignin derivative is not limited particularly, and examples of the same include: a method of charging a lignin derivative,, a vegetable oil as a phenol-containing compound, and an acid catalyst in a reaction device, and causing the same to react while sequentially adding an aldehyde under reflux conditions; and a method of charging a lignin derivative and an acid catalyst in a reaction device, and causing the same to react while sequentially adding a vegetable oil under reflux conditions. It should be noted that in a case where a plant-derived compound having an unsaturated bond is used, the plant-derived compound and the acid may be preliminarily charged so that polymerization occurs, and thereafter the lignin derivative may be charged so that modification as described above occurs.

In the synthesis of the modified lignin derivative, modification is performed by using, preferably, 0.01 to 300 parts by weight, more preferably 5 to 200 parts by weight, and further preferably 10 to 150 parts by weight, of the plant-derived compound with respect to 100 parts by weight of the lignin derivative.

In a case where the amount of the plant-derived compound is below the above-described range, the effect of modification cannot be observed. In a case where the amount of the same is above the above-described range, there is possibility that caking occurs, which makes handleability poor.

In a case where a formaldehyde is used when the modified lignin derivative is synthesized, the reaction molar ratio (F/P) between the moles of phenolic structures (P) contained in lignin and the plant-derived compound, and the moles of the aldehyde (F), is not limited particularly, since it can be controlled by reaction conditions. Further, since the lignin derivative and the vegetable oil-derived compound are mixtures in many cases, it is difficult to determine the reaction molar ratio strictly. Only for reference, therefore, the reaction molar ratio is preferably 0.1 to 3.0, more preferably 0.4 to 2.5, and further preferably 0.5 to 1.5. In a case where the reaction molar ratio is below the lower limit value, the effect of modification is not expressed sufficiently in some cases, and in a case where it is above the upper limit value, gelation occurs in some cases depending on the reaction conditions.

It should be noted that the number of reacted moles of the phenolic structure (P) indicates the number of moles of functional groups of phenol, and in a case of the lignin derivative, the same can be calculated by using a reciprocal

of the hydroxyl equivalent. In a case where a vegetable oil having a phenol skeleton is used, the determination is performed by including the number of moles of functional groups of the phenolic structure thereof also into the number of reacted moles of the phenolic structure (P). It should be noted that since a vegetable oil is generally a mixture, it is difficult to determine the reaction molar ratio strictly. It however can be determined based on the center value of the ratio of the components in the mixture. For example, in a case of cashew oil used in examples of the present invention, it is about 0.0032 (mol/g).

It should be noted that the hydroxyl equivalent of the lignin derivative used in the present invention can be determined by, for example, the following method. Into a co-stoppered Erlenmeyer flask, 1.0 g of the lignin derivative sample, and 4.0 g of acetic anhydride/pyridine (1/3 capacity ratio) mixture solution were charged and dissolved. This solution is held at 60°C for three hours, and thereafter, 1 ml of pure water is added. The solution obtained in this way is determined by titration with 0.1 mol/L NaOH aqueous solution until pH=10 as an end point, and hydroxyl equivalent can be determined by the following formula:

$$\text{Hydroxyl equivalent (g/eq)} = 1000*W/(((TB*f*S/SB)-(T*f))*N)$$

The meanings of the signs in the formula are as follows:

W: sample weight (g)
TB: the amount titrated in blank titration (ml)
SB: the amount of acetic anhydride-pyridine mixture solution in blank titration (g)
T: the amount titrated in sample titration (ml)
S: the amount of acetic anhydride-pyridine mixture solution added in sample titration (g)
f: factor of sodium hydroxide standard aqueous solution
N: normality of sodium hydroxide standard aqueous solution

Regarding the above-described modified lignin derivative, the ratio of modification is not limited particularly, but the use is preferably at a ratio of 10% to 70% by weight, more preferably 20% to 50% by weight, and further preferably 30% to 45% by weight, with respect to the entirety of the modified lignin derivative.

If the modification ratio is less than the above-described lower limit value, the effects of modification are not expressed sufficiently in some cases. On the other hand, if the modification ratio is more than the above-described upper limit value, the modified lignin derivative becomes difficult to be solidified, thereby having poor handleability, and the reaction thereof becomes difficult to be controlled, whereby a gelated product is generated, in some cases.

The acid catalyst used when the modified lignin derivative is synthesized is not limited particularly, but examples of the same include inorganic acids such as hydrochloric acid, sulfuric acid, phosphoric acid, and phosphorous acid; organic acids such as oxalic acid, diethyl sulfuric acid, para-toluenesulfonic acid, and organic phosphonic acid; and metal salts such as zinc acetate. These can be used alone or in combination of two or more. Among these, the following are preferred: oxalic acid; sulfuric acid-based or sulfonic acid-based substances such as sulfuric acid, diethyl sulfuric acid, and para-toluenesulfonic acid; and phosphoric acid-based substances such as phosphoric acid and phosphorous acid. Further, among these, oxalic acid, or a sulfuric acid-based or sulfonic acid-based substance is preferably used.

The amount of the acid catalyst added is not limited particularly, but preferably, the amount is in a range of 0.05 to 5 parts by weight, and particularly preferably 0.3 to 2.5 parts by weight, with respect to 100 parts by weight of the lignin derivative.

If the amount of the acid catalyst added is less than the lower limit value, the reaction does not sufficiently proceed in some cases. On the other hand, if the amount of the same exceeds the upper limit value, a gelated product is generated in some cases depending on the reaction conditions, as is in the above-described case where the reaction molar ratio is high.

When the modified lignin derivative is synthesized, a reaction solvent can be used. This reaction solvent is not limited particularly, and water, an organic solvent, or the like can be used, among which water or methanol is typically used. Alternatively, paraformaldehyde may be used as an aldehyde, without use of the reaction solvent. Examples of the organic solvent include: alcohols such as methanol, ethanol, propanol, butanol, and amyl alcohol; ketones such as acetone, and methyl ethyl ketone; glycols such as ethylene glycol, diethylene glycol, triethylene glycol, and glycerol; glycolethers such as ethylene glycolmonomethyl ether, ethylene glycolmonoethyl ether, diethylene glycolmonomethyl ether, and triethylene glycolmonomethyl ether; ethers such as 1,4-dioxane; and aromatics such as toluene, and xylene. These can be used alone or in combination of two or more.

In one or a plurality of embodiments, the lignin derivative may be modified with a phenol compound together with the above-described plant-derived compound in combination so that a modified lignin derivative is synthesized.

The above-described phenol compound include, more specifically, phenols and alkyl phenols, examples of which include: cresols such as o-cresol, m-cresol, and p-cresol; ethyl phenols such as o-ethyl phenol, m-ethyl phenol, and p-ethyl phenol; butyl phenols such as isopropyl phenol, butyl phenol, and p-tert-butyl phenol; and, long chain alkyl phenols such as p-tert-amylphenol, p-octyl phenol, p-nonyl phenol, and p-cumylphenol. These can be used alone or in combination of two or more.

The amount of phenol added, in one or a plurality of embodiments, is 5 parts by weight or more, 20 parts by weight or more, or 30 parts by weight or more, and 500 parts by weight or less, 300 parts by weight or less, 200 parts by weight or less, 100 parts by weight or less, or 80 parts by weight or less, with respect to 100 parts by weight of lignin derivative.

The molecular weight of the modified lignin derivative is not limited particularly. The modified novolac resin, however, preferably has a number average molecular weight of 400 to 5000, and more preferably 500 to 3000. If the number average molecular weight is within the above-described range, the resin has good handleability. If the number average molecular weight is below the above-described lower limit value, handleability decreases in some cases; for example, a viscous substance having a high viscosity is obtained, or a substance that, even though solidified, tends to cake during storage in summer is obtained. Besides, if the number average molecular weight exceeds the above-described upper limit value, a substance that is hardly dissolved in a solvent, or has poorer compatibility with a substance to be formulated with, is obtained in some cases.

The above-described number average molecular weight can be analyzed by using a method identical to that for the lignin derivative. Depending on modification conditions, however, a part of the same becomes a component insoluble in the solvent in some cases. In such a case, the soluble component, which is a majority, may be analyzed, but in a case where the insoluble component is much in amount, the solvent is desirably replaced with a suitable solvent.

The form of the modified lignin derivative used in the composition of the present invention is not limited particularly; the form that can be thought of is a micropowder form, or alternatively, a granular form, a pellet form, or a vanish form. From the viewpoint of handleability when it is kneaded into a rubber, that in a granular form or a pellet form is preferably used.

<Resin composition>

The resin composition of the present disclosure may contain a phenol-based resin, a filler and a crosslinking agent that are to be described below, etc., in addition to the modified lignin derivative.

The method for producing the resin composition according to the present disclosure may include the step of kneading the lignin derivative and a phenol-based resin. Additionally, the method may include a step of premixing an arbitrary component and thereafter performing kneading, as required. Further, in a case where a filler, a crosslinking agent, an anti-aging agent, and other additives are contained, the order in which these are subjected to kneading is not limited in particular.

Examples of the kneading machine include a Banbury mixer, a kneader, and a roller mill.

Upon kneading, an organic solvent may be used as required. The organic solvent is not limited particularly, and examples of the same include methanol, ethanol, propanol, butanol, methyl cellosolve, acetone, methyl ethyl ketone, methyl isobutyl ketone, N,N-dimethyl formamide, N,N-dimethylacetamide, N-methyl-2-pyrrolidone, quinoline, cyclopentanone, m-cresol, and chloroform. One of these or a mixture of two or more of these is used. The concentration of a solid component in the resin composition is not limited particularly, but as one example, the concentration is about 60 to 98 mass%, and preferably about 70 to 95 mass%.

In a case where the lignin derivative and the phenol-based resin are used, the kneading may be performed in the above-described manner, but alternatively the following manner may be applied: the modified lignin derivative is charged into a reactor after the phenol-based resin is obtained by reaction, and is subjected to melt-kneading; or, after the modified lignin derivative is obtained by reaction, the phenol-based resin is charged into a reactor, and is subjected to melt-kneading. Other additives can be preliminarily mixed in the same manner.

In one example of the producing method, a lignin derivative and a phenol-based resin are mixed by a heat plate, or a mixing machine such as a mixer or a roller mill, so that a mixture resin is obtained.

<Rubber composition>

The modified lignin derivative in the present invention described herein can be used as a rubber composition. In this case, the rubber composition is characterized in containing the modified lignin derivative, and the diene-based rubber. Additionally, the above-described composition can further contain a phenol-based resin.

<Method for producing rubber composition>

The method for producing a rubber composition according to the present invention includes the step of kneading a raw material rubber and a modified lignin derivative. The raw material rubber and arbitrary components may be premixed and thereafter kneaded as required. In a case where, for example, a phenol-based resin, a filler, a crosslinking agent, a vulcanizing agent, a vulcanization promoter, an anti-aging agent, and other additives are contained as well, the order of kneading of the additives is not particularly limited.

Here, examples of the kneading machine include a Banbury mixer, a kneader, and a roller mill.

In kneading, an organic solvent may be used as required. The organic solvent is not limited particularly, and examples of the same include methanol, ethanol, propanol, butanol, methyl cellosolve, acetone, methyl ethyl ketone, methyl isobutyl ketone, N,N-dimethyl formamide, N,N-dimethylacetamide, N-methyl-2-pyrrolidone, quinoline, cyclopentanone, m-cresol, and chloroform. One of these or a mixture of two or more of these is used. Further, the concentration of the solid component in the rubber composition is not particularly limited, but as an example, the concentration is about 60 to 98 mass%, and preferably about 70 to 95 mass%.

In a case where the lignin derivative and the phenol-based resin are used, the kneading may be performed in the above-described manner, but alternatively the following manner may be applied: the modified lignin derivative is charged into a reactor after the phenol-based resin is obtained by reaction, and is subjected to melt-kneading; or, after the modified lignin derivative is obtained by reaction, the phenol-based resin is charged into a reactor, and is subjected to melt-kneading. Other additives can be preliminarily mixed in the same manner.

<Raw material rubber>

Examples of a raw material rubber that can be used in the present invention include natural rubber (NR), modified natural rubber, styrene butadiene rubber (SBR), butadiene rubber (BR), isoprene rubber (IR), butyl rubber (IIR), ethylene propylene diene rubber (EPDM), acrylonitrile butadiene rubber (NBR), and chloroprene rubber (CR). These may be used alone or two or more may be mixed and used. As having excellent properties regarding resistance to scratches, abrasion resistance, fatigue resistance, flexing crack growth resistance, and the like, one or more types of rubbers among natural rubber (NR), modified natural rubber, styrene butadiene rubber (SBR) and butadiene rubber (BR) are preferable, and further, from the viewpoint of availability, natural rubber and/or butadiene rubber (BR) are more preferable.

The amount of bonded styrene of the above-described styrene butadiene rubber (SBR) is preferably 10 % or more, and more preferably 15 % or more. In a case where the amount of bonded styrene is 10 % or more, the gripping performance in a case where the rubber composition of the present invention is for example used for the cap treat for tire is particularly good. Further, the amount of bonded styrene is preferably 60 % or less, and more preferably 50 % or less.

The butadiene rubber (BR) is preferably a high-cis BR in which bonds of 90 % or more among bonds of the butadiene units are cis-1,4 bonds. By formulating the high-cis BR, hysteresis loss can be reduced, whereby fuel efficiency can be improved. Further, abrasion resistance, flexing crack growth resistance, and anti-aging performance can be improved excellently.

In a case where styrene butadiene rubber (SBR) and/or butadiene rubber (BR) are formulated, the content of SBR and/or BR is preferably 50 mass% or less in the rubber component, and is more preferably 30 mass% or less. In a case where the content of SBR and/or BR is 50 mass% or less, it is possible to control the petroleum resources ratio in the rubber component to a low level, thereby further reducing the load on the environment.

The rubber component of the present invention may contain a functional-group-containing natural rubber (modified natural rubber) and/or a functional-group-containing diene-based rubber that includes at least one selected from the following functional groups: alkoxyl group, alkoxysilyl group, epoxy group, glycidyl group, carbonyl group, ester group, hydroxy group, amino group, and silanol group. In the case where natural rubber and/or diene-based rubber includes these functional groups, the functional groups react with surfaces of the filler such as silica or carbon black, or mutually act with each other, thereby improving the dispersion properties of the filler.

In a case where a functional-group-containing natural rubber (modified natural rubber) and/or a functional-group-containing diene-based rubber is included, preferably, at least one functional group selected from alkoxyl group, alkoxysilyl group, epoxy group, glycidyl group, carbonyl group, ester group, hydroxy group, amino group, and silanol group is included at a ratio in a range of 0.001 to 80 mol% in the functional-group-containing natural rubber or the functional-group-containing diene-based rubber. If the content of the functional group is equal to or more than 0.001 mol%, the above-described effect of reacting with surfaces of silica or carbon black or mutually acting with each other is obtained excellently, and if the content is equal to or less than 80 mol%, an increase in the viscosity of the unvulcanized rubber composition at the time of manufacture is suppressed, whereby the processability is improved. The content of such a functional group is preferably in a range of 0.01 to 50 mol%, and further preferably in a range of 0.02 to 25 mol%.

As a method for causing natural rubber and/or diene-based rubber to contain at least one functional group

selected from alkoxyl group, alkoxysilyl group, epoxy group, glycidyl group, carbonyl group, ester group, hydroxy group, amino group, and silanol group, for example, the following method can be used: a method of introducing a functional group to a polymerization terminal of a styrene-butadiene copolymer, which is polymerized in a hydrocarbon solvent by using an organic lithium initiator; and a method of epoxidizing a natural rubber or a diene-based rubber by the chlorohydrin method, the direct oxidation method, the hydrogen peroxide method, the alkyl hydroperoxide method, or the like.

The rubber composition of the present invention preferably contains natural rubber and/or modified natural rubber, or styrene butadiene rubber (SBR), butadiene rubber (BR), so that the content thereof in the rubber component is in a range of 50 to 100 mass%.

In a case where the above-described content is 50 mass% or more, the effects of improving E' (storage elastic modulus) and the effect of reducing tanδ around 60°C are exhibited particularly remarkably.

It is preferable that natural rubber and/or modified natural rubber account for 100 mass% of the rubber component, since in this case the load on the environment is small. When, however, further higher abrasion resistance or flexing crack growth resistance is needed, the other rubbers such as the above-described styrene butadiene rubber (SBR) and butadiene rubber (BR) may be combined; this is convenient from the viewpoint that performances thereof can be adjusted.

The content of the rubber compound is not particularly limited, but the content is preferably equal to or more than 100 parts by mass, and equal to or less than 10000 parts by mass, more preferably equal to or more than 200 parts by mass and equal to or less than 5000 parts by mass, and further more preferably equal to or more than 300 parts by mass and equal to or less than 2000 parts by mass, with respect to 100 parts by mass of the modified lignin derivative. In a case where the content of the rubber compound is too small, the hardness increases too much, which results in decrease of elongation at break. In a case where the content is too much, the effect of reinforcement decreases.

(Filler)

Next, the filler is described.

In the present invention, additionally, the filler may be used.

As the filler, those typically used in the resin composition or the rubber composition can be used. As the filler, preferably a filler that contains one or more selected from the group consisting of at least carbon black, silica, alumina, and cellulose fiber is used, and particularly preferably an inorganic filler is used. Particularly, the filler preferably contains at least one selected from silica and carbon black. When silica is used, an excellent effect of reducing tanδ is achieved, and particularly in a case where the resin composition of the present invention and silica are used in combination, the effect of improving E' (storage elastic modulus) and the effect of reducing tanδ around 60°C become particularly excellent.

The content of the filler is preferably in a range of 10 to 150 parts by mass with respect to 100 parts by mass of the rubber component. In a case where the content of the filler is equal to or more than 10 parts by mass, a good effect of improving E' (storage elastic modulus) of a rubber composition for tire is achieved, and in a case where the content is equal to or less than 150 parts by mass, there is less risk that E' (storage elastic modulus) would excessively rise, and the processability of the rubber composition during preparation is good, while there is less risk that the degradation of dispersion properties of the filler in the rubber composition would lead to degradation of the abrasion resistance and the elongation at break, etc., as well as unnecessary increase of tanδ around 70°C and deterioration of fuel efficiency caused by the same.

In a case where silica is formulated as the filler, it is preferable to formulate silica in a range of 10 to 150 parts by mass with respect to 100 parts by mass of the rubber component, and to formulate a silane coupling agent in a range of 1 to 20 mass% with respect to the content of the silica. In a case where, in a rubber composition for tire, the content of silica with respect to 100 parts by mass of the rubber component is equal to or more than 10 parts by mass, the effect of improving E' (storage elastic modulus) of the rubber composition for tire is good, and in a case where it is equal to or less than 150 parts by mass, there is less risk that E' (storage elastic modulus) would excessively rise, and the processability of the rubber composition for tire during preparation is good. Besides, risk can be reduced that the degradation of dispersion properties of silica in the rubber composition would lead to degradation of the abrasion resistance and the elongation at break, as well as unnecessary increase of tanδ around 70°C and deterioration of fuel efficiency caused by the same. The content of silica is further preferably equal to or more than 20 parts by mass, and still further preferably equal to or more than 30 parts by mass, while it is further preferably equal to or less than 100 parts by mass, and still further preferably equal to or less than 80 parts by mass.

As silica, those that have been used conventionally for reinforcement of rubber can be used, and any may be selected appropriately from, for example, dry silica, wet silica, and colloidal silica. Particularly, silica having a nitrogen adsorption specific surface area (N2SA) preferably in a range of 20 to 600 $m^2/g$, further preferably in a range of 40 to 500 $m^2/g$, and still further preferably in a range of 50 to 450 $m^2/g$, is used. In a case where silica has N2SA equal to or more than 20 $m^2/g$, the silica is preferable in the point that it has a great reinforcing effect with respect to the rubber composition for tire. In a case where silica has N2SA equal to or less than 600 $m^2/g$, the dispersion properties of the

silica in the rubber composition for tire is good, and the silica is preferable in the point that it is possible to prevent increase of pyrogenicity during use of a pneumatic tire in which the rubber composition is used.

Further, the rubber composition of the present invention can contain a filler other than those described above, depending on the purpose of use. In the case where a filler is added, examples of the filler include inorganic fillers such as powders and fiber fragments. Examples of the powder as the filler include powder of the following materials: silicates such as talc, baked clay, unbaked clay, mica, and glass; oxides such as titanium oxide, and alumina; carbonates such as magnesium silicate, calcium carbonate, magnesium carbonate, and hydrotalcite; oxides such as zinc oxide, and magnesium oxide; hydroxides such as aluminum hydroxide, magnesium hydroxide, and calcium hydroxide; sulfates or sulfites such as barium sulfate, calcium sulfate, and calcium sulfite; borates such as zinc borate, barium metaborate, aluminum borate, calcium borate, and sodium borate; nitrides such as aluminum nitride, boron nitride, and silicon nitride. Examples of the fiber fragments as the filler include fiber fragments such as glass fiber and carbon fiber. Other than these, the examples of the filler include organic fillers such as wood flour, pulp pulverized powder, cellulose fiber, cloth pulverized powder, thermosetting resin cured product powder, aramid fiber, and talc.

Further, in the case where the rubber component contains an epoxidized natural rubber, this is preferable in the point that silica and the rubber component easily act on each other.

(Crosslinking agent)

Next, the crosslinking agent is described.

To the rubber composition of the present invention, a crosslinking agent can be added as required. In the case where a crosslinking agent is added, the crosslinking agent is not limited particularly, as long as it is a crosslinking agent that can be crosslinked with a modified lignin derivative or a rubber compound, or alternatively, both of the same, but a crosslinking agent containing a compound represented by Formula (4) shown below is preferable.

$$Z\text{-}(CH_2OR)_m \qquad (4)$$

where Z represents one of melamine residue, urea residue, glycolyl residue, imidazolidinone residue, and aromatic ring residue; m represents an integer of 2 to 14; and R independently represents an alkyl group having 1 to 4 carbon atoms or a hydrogen atom. It should be noted that $-CH_2OR$ is directly coupled with any of nitrogen atom of melamine residue, nitrogen atom of primary amino group of urea residue, nitrogen atom of secondary amino group of glycolyl residue, nitrogen atom of secondary amino group of imidazolidinone residue, and carbon atom of aromatic ring of aromatic ring residue.

The rubber composition containing such a compound has excellent mechanical properties after curing, and contributes to the improvement of durability and appearance of a cured article. This is because the compound contained in the crosslinking agent, which is represented by Formula (4) described above, is capable of forming polyfunctional crosslinking points, which allows the modified lignin derivative to be crosslinked at a high density and uniformly, thereby causing a homogeneous and rigid skeleton to be formed. With the rigid skeleton, the mechanical properties and durability (including resistance to boiling, etc.) of the cured article are improved, and at the same time, occurrence of swellings, cracks, and the like is suppressed, whereby the appearance of the cured article is also improved.

Further, as described above, $-CH_2OR$ is directly coupled with any one of nitrogen atom of melamine residue, nitrogen atom of primary amino group of urea residue, nitrogen atom of secondary amino group of glycolyl residue, nitrogen atom of secondary amino group of imidazolidinone residue, and carbon atom of aromatic ring of aromatic ring residue, and in a case where two or more "$-CH_2OR$"s are coupled with one nitrogen atom or carbon atom, "R" included in at least one of the "$-CH_2OR$"s is preferably an alkyl group. This allows the modified lignin derivative to be surely crosslinked.

In the present description, the "melamine residue" refers to a group having a melamine skeleton represented by Formula (A) shown below.

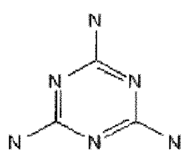

(A)

Further, in the present description, the "urea residue" refers to a group having an urea skeleton represented by Formula (B) shown below.

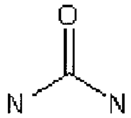

(B)

Further, in the present description, the "glycolyl residue" refers to a group having a glycolyl skeleton represented by Formula (C) shown below.

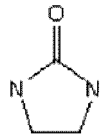

(C)

Further, in the present description, the "imidazolidinone residue" refers to a group having an imidazolidinone skeleton represented by Formula (D) shown below. [0087]

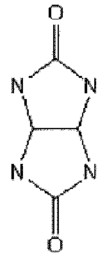

(D)

Further, in the present description, the "aromatic ring residue" refers to a group having an aromatic ring (benzene ring).

Further, as the compound represented by Formula (4) shown above, particularly the compound represented by any one of Formulae (5) to (8) shown below is preferably used. These react with respect to crosslinking reaction points on an aromatic ring included in the phenol skeleton in the modified lignin derivative, thereby surely crosslinking the modified lignin derivative, and at the same time, causes self-crosslinking due to a self-condensation reaction between functional groups. Consequently, a cured article that has a particularly homogeneous and rigid skeleton, and that has excellent mechanical properties, durability, and appearance is obtained.

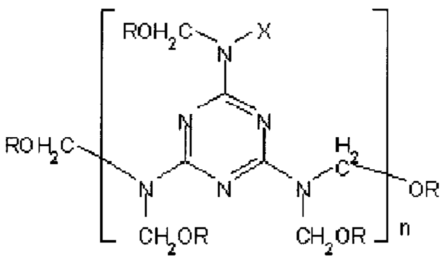

(5)

where X represents $CH_2OR$ or a hydrogen atom; R independently represents an alkyl group having 1 to 4 carbon atoms or a hydrogen atom; and n represents an integer of 1 to 3.

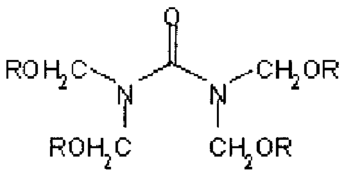

(6)

where R independently represents an alkyl group having 1 to 4 carbon atoms or a hydrogen atom.

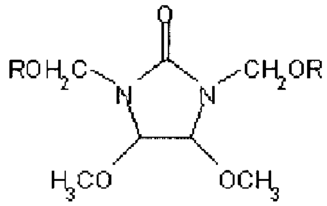

(7)

where R independently represents an alkyl group having 1 to 4 carbon atoms or a hydrogen atom.

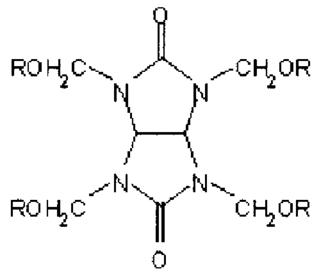

(8)

where R independently represents an alkyl group having 1 to 4 carbon atoms or a hydrogen atom.

Further, as the compound represented by Formula (5) shown above, particularly the compound represented by either Formula (9) or Formula (10) shown below is preferably used. These react with respect to crosslinking reaction points on an aromatic ring included in the phenol skeleton in the modified lignin derivative, thereby particularly surely crosslinking the modified lignin derivative, and at the same time, causes self-crosslinking due to a self-condensation reaction between functional groups. Consequently, a cured article that has an especially homogeneous and rigid skeleton, and that has excellent mechanical properties, durability, and appearance is obtained.

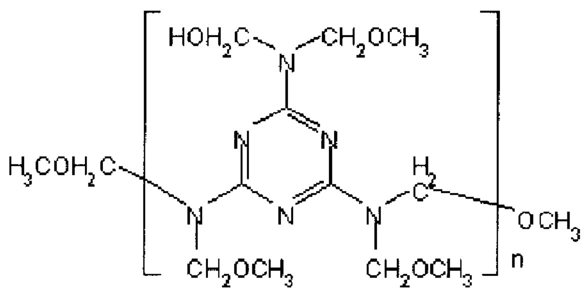

(9)

where n represents an integer of 1 to 3.

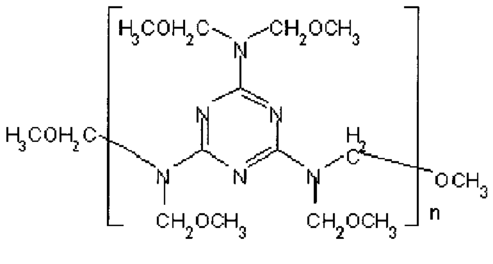

(10)

where n represents an integer of 1 to 3.

Further, the above-described crosslinking agent may contain, in place of the compound represented by Formula (4), or together with this compound, at least one compound of hexamethylene tetramine, quinuclidine, and pidine. A cured article containing such a crosslinking agent has an excellent mechanical strength, and high durability and appearance. This is because hexamethylene tetramine, quinuclidine, and pidine crosslink the modified lignin derivative (A) at a high density and uniformly, thereby forming a homogeneous and rigid skeleton.

Further, in the crosslinking agent, a crosslinking agent component other than the above-described compounds may be used. Examples of the crosslinking agent component other than the above-described compounds include: epoxy

resins such as orthocresol novolac type epoxy resin, bisphenol A type epoxy resin, epoxidized glycerol, epoxidized linseed oil, and epoxidized soybean oil; and isocyanate compounds such as hexamethylene diisocyanate, and toluene diisocyanate. Examples of the crosslinking agent component other than the above-described compounds include, as compounds that can be crosslinked with respect to an aromatic ring of a modified lignin derivative by electrophilic substitution; aldehydes such as formaldehyde, acetaldehyde, paraformaldehyde, and furfural; aldehyde sources such as polyoxymethylene; crosslinking agents that are normal phenol resins and are known, such as resol-type phenol resin, other than hexamethylene tetramine; and compounds that can be crosslinked with respect to an aromatic ring of a lignin derivative by electrophilic substitution. Further, the compound is preferably in a range of 5 to 150 parts by mass, and more preferably in a range of 7.5 to 50 parts by mass, with respect to 100 parts by mass of the modified lignin derivative.

<Other components>

In the rubber composition of the present invention, additives are appropriately formulated as required in addition to the rubber component, the modified lignin derivative and the filler. Examples of the additives include: a softener, a tackifier, an antioxidant, an ozone deterioration inhibitor, an anti-aging agent, sulfur and other vulcanizing agents, a vulcanization promoter, a vulcanization auxiliary, a peroxide, zinc oxide, and stearic acid.

As a vulcanizing agent, an organic peroxide or a sulfur-based vulcanizing agent can be used. As the organic peroxide, the following can be used: benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butyl peroxy)hexane, 2,5-dimethyl-2,5-di(benzoyl peroxy)hexane, 2,5-dimethyl-2,5-di(t-butyl peroxy)hexyne-3, or 1,3-bis(t-butyl peroxy propyl)benzene. Further, as the sulfur-based vulcanizing agent, for example, sulfur, or morpholine disulfide can be used. Among these, sulfur is preferable.

As the vulcanization promoter, a vulcanization promoter containing at least one of the following can be used: sulfenamide-based, thiazole-based, thiuram-based, thiourea-based, guanidine-based, dithiocarbamic acid-based, aldehyde-amine-based or aldehyde-ammonium-based, imidazoline-based, or xanthate-based vulcanization promoters.

As the anti-aging agent, an appropriate one can be selected and used from amine-based, phenol-based, and imidazole-based compounds, carbamic acid metal salts, and waxes.

In the rubber composition of the present invention, a compounding agent normally used in rubber industries, such as stearic acid, and zinc oxide, can be appropriately formulated in addition.

One example of the producing method is described below.

(1) Kneading a raw material rubber, a modified lignin derivative, and an arbitrary component (except for a vulcanizing agent and a vulcanization promoter) by a closed type kneading machine such as a Banbury mixer, so as to obtain a rubber composition containing no vulcanizing substance. Here, knead conditions (temperature, time) are different depending on the kneading machine used.

(2) Adding a vulcanizing agent and a vulcanization promoter to the rubber composition obtained in (2) above, using a roller mill such as an open roll or the above-described kneading machine, and again kneading the same, so as to obtain a rubber composition containing a vulcanizing substance.

<Method for producing rubber composition cured article and tire>

Next, steps for obtaining a rubber composition cured article and a tire are described. A cured article of the rubber composition and a tire can be obtained by molding the rubber composition. The molding method is not particularly limited, since it is different depending on the purpose of use, but in a case where the molding is performed with use of a mold, the rubber composition produced is molded with use of a mold equipped with a hydraulic press, whereby a rubber composition cured article is obtained.

As an example, in a case where the rubber composition of the present invention is used for tire tread, the production of the same is performed in a normal manner. More specifically, the rubber composition, in an unvulcanization stage, is formed into a shape of a tire tread part by extrusion, and is bonded in a normal manner on a tire molding machine, whereby an unvulcanized tire is molded. The unvulcanized tire is heated and pressurized in a vulcanizing machine, whereby a tire is obtained.

The temperature for molding is preferably about 100°C to 280°C, more preferably about 120°C to 250°C, further more preferably about 130°C to 230°C. In a case where the temperature for molding is above 230°C, there is a risk of deterioration of rubber, and in a case where the temperature is below 100°C, there is a risk that molding cannot be achieved.

<Molding material>

The present invention, in another aspect, is a molding material containing a modified lignin derivative of the present invention. The molding material of the present invention can be used in, for example, a semiconductor component, an aircraft component, an automobile component, casting, an industrial machine component, an electronic component, an electric component, and a mechanism component.

In the resin composition used in the molding material of the present invention, as described above, the modified lignin derivative is used, and other than this, a phenol-based resin, a filler and a crosslinking agent to be described below, and the like, are used.

The molding method is not limited particularly, and the molding material of the present invention can be molded into a molded article by using a known molding method, for example, the injection molding method, the compression molding method, the extrusion molding method, or the casting molding method. The molded article thus obtained may be in any form, and it may be, for example, in the form of an intermediate molded article before the molded material is formed into a final molded article, or may be in the form of a final molded article.

Example

The present invention is described by way of examples, but the present invention is not limited by these examples. "Part(s)" described below refers to "part(s) by weight", and "%" described below refers to "% by weight".

(Example 1)

(1) Extraction of lignin derivative

100 parts of cedar wood flour (finer than 60 mesh), and 400 parts of solvent composed of pure water were mixed, and introduced into 1L-autoclave. Then, while the contents were agitated at 300 rpm, the agitation was performed at room temperature for 15 minutes as a pretreatment so that the cedar wood flour and the solvent were sufficiently mixed with each other, and thereafter the contents were treated at 300°C under 10 MPa for 60 minutes, so that the cedar wood flour was decomposed.

Next, the obtained decomposed substance was filtered, and solid components thus filtered out were collected.

Next, the obtained solid component was immersed in 250 parts of acetone for twelve hours. This was filtered, whereby acetone-soluble components were collected.

Next, acetone was distilled away from the acetone-soluble components, and the components were dried, whereby 15.2 parts of lignin derivative was obtained. The number average molecular weight thereof was 410, and the softening point thereof was 108°C.

(2) Production of modified lignin derivative

100 parts of lignin derivative, 60 parts of cashew oil, and 1 part of oxalic acid were charged into a reaction device provided with an agitation device, a reflux condenser, and a thermometer. At a time when the reaction device reaches 110°C, the reactor was set. After the temperature of the reaction device reached 130°C, 35 parts of 37 % formaldehyde aqueous solution was sequentially added for 10 minutes, and thereafter reaction under reflux was allowed to occur for 50 minutes. Next, the temperature of the reaction device was raised to 160°C, and dehydration under atmospheric pressure was performed for 30 minutes. Thereafter, vacuum dehydration was performed for 30 minutes, and the contents were taken out of the reactor. As a result, 153 parts of solid modified lignin at normal temperature was obtained.

(3) Production of rubber composition

100 parts of the modified lignin derivative, 500 parts of a natural rubber compound, 400 parts of carbon black, 20 parts of hexamethylene tetramine as a resin crosslinking agent, 10 part of sulfur as a vulcanizing agent, 10 parts of zinc oxide as a vulcanization promotion auxiliary, and 15 parts of stearic acid as a mold release agent were kneaded by a Banbury mixer heated to 100°C, whereby a rubber composition was obtained.

(Example 2)

Example 2 was identical to Example 1 except that in the production of the modified lignin derivative, the amount of oxalic acid was 3 parts.

(Example 3)

Example 3 was identical to Example 1 except that in the production of the modified lignin derivative, the amount of the 37 % formaldehyde aqueous solution was 39 parts.

(Example 4)

Example 4 was identical to Example 1 except that in the production of the modified lignin derivative, the amount of cashew oil was 40 parts, and the amount of the 37 % formaldehyde aqueous solution was 39 parts.

(Example 5)

Example 5 was identical to Example 3 except that in the production of the modified lignin derivative, 1 part of para-toluenesulfonic acid (PTSA) was added in place of oxalic acid.

(Example 6)

Example 6 was identical to Example 1 except that in the production of the modified lignin derivative, the formaldehyde aqueous solution was not added, and 1 part of sulfuric acid was added in place of oxalic acid.

(Example 7)

Example 7 was identical to Example 1 except that in the production of the modified lignin derivative, the amount of formaldehyde aqueous solution was 29 parts, and 1 part of sulfuric acid was added in place of oxalic acid.

(Example 8)

Example 8 was identical to Example 1 except that in the extraction of the lignin derivative, rice straw was used in place of cedar wood flour. It should be noted that the lignin derivative had a number average molecular weight of 390, and a softening point of 98°C.

(Example 9)

Example 9 was identical to Example 1 except that in the extraction of the lignin derivative, beech wood flour was used in place of cedar wood flour. It should be noted that the lignin derivative had a number average molecular weight of 420, and a softening point of 110°C.

(Example 10)

Example 10 was identical to Example 1 except that in the production of the rubber composition, the amount of the modified lignin derivative was 75 parts by weight, and 25 parts by weight of phenol novolac resin was used.

(Example 11)

Example 11 was identical to Example 1 except that in the production of the rubber composition, the amount of the modified lignin derivative was 75 parts by weight, and 25 parts by weight of the cashew oil modified novolac resin was used.

(Example 12)

Example 12 was identical to Example 1 except that in the production of the rubber composition, the amount of carbon black was 280 parts by mass, 70 parts by mass of silica was used, and 5 parts of a silica coupling agent was further added.

(Example 13)

Example 13 was identical to Example 1 except that in the production of the modified lignin derivative, 20 parts of tall oil was used in place of the cashew oil, the formaldehyde aqueous solution was not added, and 1 part of sulfuric

acid was added in place of oxalic acid.

(Example 14)

Example 14 was identical to Example 1 except that in the production of the modified lignin derivative, 20 parts of linseed oil was used in place of the cashew oil, the formaldehyde aqueous solution was not added, and 1 part of sulfuric acid was added in place of oxalic acid. Examples 1-14 are not according to the invention.

(Examples 15 to 18)

Examples 15 to 18 were identical to Example 1 except that in the production of the modified lignin derivative, phenol was used in addition to the cashew oil. The amounts of the cashew oil and the phenol were 20 parts and 60 parts, respectively, in Example 15, 30 parts and 40 parts, respectively, in Example 16, 40 parts and 30 parts, respectively, in Example 17, and 60 parts and 20 parts, respectively, in Example 18.

(Example 19)

Example 19 was identical to Example 1 except that in the production of the modified lignin derivative, lignin derivative obtained by the Alcell (registered trademark) process (Lignol Lignin (powder), manufactured by Lignol) was used as the lignin derivative, the amount of the cashew oil was 80 parts, the amount of the 37 % formaldehyde aqueous solution was 39 parts, and the acid used was para-toluenesulfonic acid (PTSA).

(Comparative Example 1)

A rubber composition was obtained in the same manner as that of Example 1 except that the modified lignin derivative was not used.

(Comparative Example 2)

Comparative Example 2 was identical to Comparative Example 1 except that 100 parts by mass of phenol novolac resin was used in place of the modified lignin derivative.

Various types of rubber formulated compositions that were obtained by using the modified lignins obtained in the examples described above, and the resins of the comparative examples, in the formulations (parts) shown in Table 1, and heating and kneading the same, were vulcanized by a hydraulic press at 160°C for 20 minutes, whereby 2 mm-thick vulcanized rubber sheets were produced. Results of evaluation of the same are shown in Table 1.

The following description describes various types of raw materials used in the examples and the comparative examples.

Natural rubber: manufactured by Touchi Co., Ltd., RSS3
Curing agent: hexamethylene tetramine
Carbon black: manufactured by Mitsubishi Chemical Corporation, HAF
Silica: manufactured by Evonik Industries AG, Ultrasil VN3 (BET specific surface area: 175 $m^2/g$)
Silane coupling agent: manufactured by Evonik Industries AG, Si-69
Zinc oxide: manufactured by Sakai Chemical Industry Co., Ltd.
Stearic acid: manufactured by NOF Corporation, bead stearic acid YR
Sulfur: manufactured by Hosoi Chemical Industry Co., Ltd., fine powder sulfur
Vulcanization promoter: manufactured by Ouchi Shinko Chemical Industrial Co., Ltd., MSA-G
novolac type phenol resin manufactured by Sumitomo Bakelite Co., Ltd., PR-50731 Cashew oil modified phenol resin: manufactured by Sumitomo Bakelite Co., Ltd., PR-12686

(a) Mooney viscosity

Mooney viscosity was measured according to JIS K 6300, with a Mooney viscometer manufactured by Toyo Seiki Seisaku-Sho, Ltd.

(b) Hardness (type D)

Hardness (type D) was measured according to JIS K 6253, with a durometer manufactured by Toyo Seiki

Seisaku-Sho, Ltd.

(c) Tensile stress at break, elongation at break

Tensile stress at break and elongation at break were measured according to JIS K6251, with a strograph manufactured by Toyo Seiki Seisaku-Sho, Ltd., at a tensile rate of 50 mm/min. (d) Storage elastic modulus, tanδ

Using a dynamic viscoelasticity measuring device manufactured by TA Instruments, a storage elastic modulus and a tanδ at 60°C were measured, under the conditions of dynamic strain of 2 %. The reciprocal of the tanδ of Comparative Example 1 is assumed to be 100, and values of the examples and the other comparative examples were calculated, which are shown as the results. Here, if the value of the reciprocal of the tanδ is large, it means that the tanδ of the viscoelastic properties is small, which allows heat energy generated due to cyclic deformation to be suppressed. In a case of a tire, this enables improvement of fuel efficiency.

| Table 1 | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Cm. Ex. 1 | Cm. Ex. 2 |
|---|---|---|---|---|---|---|---|---|---|---|---|---|---|---|---|---|---|---|---|---|---|---|---|---|
| Raw material | Biomass | | | Cd. | Cd. | Cd. | Cd. | Cd. | Cd. | Cd. | RS | Bch. | Cd. | Cd. | Cd. | Cd. | Cd. | Cd. | Cd. | RS | Cd. | Cd. | | |
| | Lignin derivative | | parts by mass | 100 | 100 | 100 | 100 | 100 | 100 | 100 | 100 | 100 | 100 | 100 | 100 | 100 | 100 | 100 | 100 | 100 | 100 | 100 | | |
| | Phenol | | parts by mass | | | | | | | | | | | | | | | 20 | 30 | 40 | 60 | | | |
| | Cashew oil | | parts by mass | 60 | 60 | 60 | 40 | 60 | 60 | 60 | 60 | 60 | 60 | 60 | 60 | | | 60 | 40 | 30 | 20 | 80 | | |
| | Tall oil | | parts by mass | | | | | | | | | | | | | 20 | | | | | | | | |
| | Linseed oil | | parts by mass | | | | | | | | | | | | | | 20 | | | | | | | |
| | Formaldehyde aqueous solution | | parts by mass | 49 | 49 | 39 | 39 | 39 | 0 | 29 | 49 | 49 | 49 | 49 | 49 | 0 | 0 | 49 | 46 | 44 | 41 | 39 | | |
| | Acid | Type | | OA | OA | OA | OA | PTSA | SA | SA | OA | OA | OA | OA | OA | SA | SA | OA | OA | OA | OA | PTSA | | |
| | | Amount | parts by mass | 1 | 3 | 1 | 1 | 1 | 1 | 1 | 1 | 1 | 1 | 1 | 1 | 1 | 1 | 1 | 1 | 1 | 1 | 1 | | |
| Modified lignin derivative | Number average molecular weight | | | 660 | 660 | 590 | 660 | 680 | 460 | 630 | 610 | 670 | 660 | 660 | 660 | | | 630 | 690 | 660 | 660 | 680 | | |
| | Weight average molecular weight | | | 4000 | 5000 | 3500 | 4100 | 4500 | 1700 | 2840 | 3900 | 4300 | 4000 | 4000 | 4000 | 1800 | 1300 | 3840 | 3590 | 3420 | 2910 | 5120 | | |
| | Softening point | | °C | 125 | 142 | 115 | 135 | 134 | 83 | 119 | 110 | 138 | 125 | 125 | 125 | 110 | 100 | 131 | 121 | 125 | 118 | 136 | | |

| | | | | | | | | | | | | | | | | | | | | | | | | |
|---|---|---|---|---|---|---|---|---|---|---|---|---|---|---|---|---|---|---|---|---|---|---|---|---|
| Formulation of rubber composition | Resin | Modified lignin derivative | parts by mass | 100 | 100 | 100 | 100 | 100 | 100 | 100 | 100 | 100 | 75 | 75 | 100 | 100 | 100 | 100 | 100 | 100 | 100 | 100 | | |
| | | Lignin derivative | parts by mass | | | | | | | | | | | | | | | | | | | | | |
| | | Phenol novolac resin | parts by mass | | | | | | | | | | 25 | | | | | | | | | | | 100 |
| | | Cashew modified phenol resin | parts by mass | | | | | | | | | | | 25 | | | | | | | | | | |
| | Rubber | Natural rubber compound | parts by mass | 500 | 500 | 500 | 500 | 500 | 500 | 500 | 500 | 500 | 500 | 500 | 600 | 500 | 500 | 500 | 500 | 500 | 500 | 500 | 500 | 500 |
| | Filler | Carbon black | parts by mass | 350 | 350 | 350 | 350 | 350 | 350 | 350 | 350 | 350 | 350 | 350 | 280 | 350 | 350 | 350 | 350 | 350 | 350 | 350 | 350 | 350 |
| | | Silica | parts by mass | | | | | | | | | | | | 70 | | | | | | | | | |
| | Resin crosslinking agent | Hexamethylene tetramine | parts by mass | 10 | 10 | 10 | 10 | 10 | 10 | 10 | 10 | 10 | 10 | 10 | 10 | 10 | 10 | 10 | 10 | 10 | 10 | 10 | | 10 |
| | Vulcanizing agent | Sulfur | parts by mass | 15 | 15 | 15 | 15 | 15 | 15 | 15 | 15 | 15 | 15 | 15 | 15 | 15 | 15 | 15 | 15 | 15 | 15 | 15 | 15 | 15 |
| | Vulcanization promoter | MSA-C | parts by mass | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 |
| | Vulcanization promotion auxiliary | Zinc oxide | parts by mass | 25 | 25 | 25 | 25 | 25 | 25 | 25 | 25 | 25 | 25 | 25 | 25 | 25 | 25 | 25 | 25 | 25 | 25 | 25 | 25 | 25 |
| | Mold | Stearic | parts | 10 | 10 | 10 | 10 | 10 | 10 | 10 | 10 | 10 | 10 | 10 | 10 | 10 | 10 | 10 | 10 | 10 | 10 | 10 | 10 | 10 |

| | release agent | acid | by mass | | | | | | | | | | | | | | | | | | | | | |
|---|---|---|---|---|---|---|---|---|---|---|---|---|---|---|---|---|---|---|---|---|---|---|---|---|
| Evaluation results of rubber composition (exponential format) | Reciprocal of tanδ at 60°C | | | 108 | 111 | 108 | 102 | 112 | 104 | 107 | 113 | 106 | 112 | 114 | 120 | 98 | 96 | 109 | 113 | 116 | 119 | 112 | 100 | 110 |
| | Storage elastic modulus at 20°C | | | 710 | 730 | 690 | 590 | 770 | 530 | 750 | 760 | 710 | 870 | 910 | 760 | 550 | 520 | 950 | 850 | 760 | 710 | 760 | 100 | 670 |
| | Tensile stress at break | | | 75 | 71 | 74 | 72 | 74 | 68 | 74 | 76 | 72 | 72 | 70 | 68 | 73 | 76 | 73 | 71 | 76 | 76 | 71 | 100 | 60 |
| | Elongation at break | | | 73 | 75 | 74 | 81 | 70 | 103 | 89 | 73 | 83 | 81 | 84 | 70 | 123 | 135 | 83 | 84 | 81 | 78 | 77 | 100 | 65 |

Note: Cd: Cedar, RS: Rice straw, Bch.: Beech, OA: oxalic acid, SA: sulfuric acid

As is clear from Table 1, the cured articles of the rubber compositions of the examples were excellent regarding the reciprocals of tanδ values, which are criteria regarding the low level of heat energy generated due to cyclic deformation. The cured articles of the same also had high storage elastic moduli, which are criteria regarding the hardness, and further, exhibited high values of tensile stress at break and elongation at break. By using the modified lignin according to the present invention, both of the above-described excellent properties and the high degree of plant derivation can be achieved, whereby the load on the environmental can be reduced.

[Evaluation regarding molding materials]

Resin molded articles were prepared with the modified lignin derivatives of Examples 1, 5, 15, and 18, and appearance and bending strength thereof were evaluated in the following manner (Examples 20 to 23). Results of the evaluation are shown in Table 2.

<Preparation of resin composition>

To 100 parts by mass of the modified lignin derivative or lignin, 15 parts by mass of hexamethylenetetramine was added at normal temperature, and the materials obtained were crushed and mixed, whereby lignin derivative compositions were prepared.

<Preparation of resin molded article>

To each of the lignin derivative composition, glass fiber (glass milled fiber, manufactured by Nitto Boseki Co., Ltd., standard fiber diameter: 10±1.5 μm, average fiber length: 90 μm) was added, so that the ratio of the same mixed with the lignin derivative composition was 50.5 % by weight. Kneading by a Labo Plastomill at 90°C at 50 rpm was performed, and the composition thus kneaded was subjected to compression molding at 175°C for 3 minutes, whereby resin molded articles each of which had a width of 10 mm, a length of 100 mm, and a height of 4 mm were obtained.

<Appearance>

Appearances of the resin molded articles thus obtained were checked by visual observation, and were evaluated. The evaluation criteria of appearance are as follows. Evaluation criteria:

Good: Surfaces of the obtained molded article are smooth, and there is no protrusion or recess visible to the naked eye on the surfaces of the molded article, or there are only one or two deformed portions, wrinkles, or stains thereon.
Fair: Protrusions and recesses visible to the naked eye are recognized on surfaces of the molded article, or there are three to five deformed portions, wrinkles, or stains.
Poor: Significant protrusions and recesses visible to the naked eye are recognized on surfaces of the molded article, or there are six or more deformed portions, wrinkles, or stains.

<Bending strength>

Regarding the resin molded articles, the bending strengths thereof were determined according to JIS K6911. More specifically, a three-point bending test was performed by applying a load at a rate of 2 mm/min., with a universal testing machine (manufactured by Shimadzu Corporation, Autograph AG-Xplus)

| Table 2 | | | Ex. 20 | Ex. 21 | Ex. 22 | Ex. 23 | Comp. Ex. 3 | Comp. Ex. 4 |
|---|---|---|---|---|---|---|---|---|
| Raw material | Biomass | | Cedar | Cedar | Cedar | Cedar | | |

(continued)

| Table 2 | | | | Ex. 20 | Ex. 21 | Ex. 22 | Ex. 23 | Comp. Ex. 3 | Comp. Ex. 4 |
|---|---|---|---|---|---|---|---|---|---|
| | Lignin derivative | | parts by mass | 100 | 100 | 100 | 100 | | |
| | Phenol | | parts by mass | | | 20 | 60 | | |
| | Cashew oil | | parts by mass | 60 | 60 | 60 | 20 | | |
| | Tall oil | | parts by mass | | | | | | |
| | Linseed oil | | parts by mass | | | | | | |
| | Formaldehyde aqueous solution | | parts by mass | 49 | 39 | 49 | 41 | | |
| | Acid | Type | | OA | PTSA | OA | OA | | |
| | | Amount | parts by mass | 1 | 1 | 1 | 1 | | |
| Modified lignin derivative | Number average molecular weight | | | 660 | 680 | 630 | 660 | | |
| | Weight average molecular weight | | | 4000 | 4500 | 3840 | 2910 | | |
| | Softening point | | °C | 125 | 134 | 131 | 118 | | |
| Resin | Lignin derivative | | | | | | | 100 | 65 |
| | Modified lignin derivative | | | 100 | 100 | 100 | 100 | | |
| | Phenol novolac resin | | | | | | | | 35 |
| Result of evaluation of molded article | Appearance | | | Good | Good | Good | Good | Poor | Good |
| | Bending strength | | | 103 | 119 | 120 | 143 | 15 | 81 |
| Note: OA: oxalic acid | | | | | | | | | |

As is clear from Table 2, molded articles of Examples 20 to 23 in which the modified lignin derivatives were used as molding materials were superior to Comparative Examples 3 and 4, regarding appearance and/or bending strength.

Industrial Applicability

The modified lignin derivative of the present invention is suitable for rubber reinforcement or for use in a molding material. For example, the rubber composition containing the modified lignin derivative of the present invention is characterized in that heat energy generated by cyclic deformation is low, and can be used suitably for a purpose that requires excellent modulus of elasticity, tensile stress at break, and elongation at break, particularly for use in tire.

**Claims**

1. A rubber composition comprising
a modified lignin derivative obtained by modifying a lignin derivative with a plant-derived compound and a phenol compound, and
diene based rubber,
wherein the plant-derived compound is a substance containing a phenol structure,
wherein the plant-derived compound containing a phenol structure includes at least one selected from cashew oil, sumac extract, cardanol, cardol, methyl cardol, anacardic acid, urushiol, laccol, thitsiol, and purification products of the same.,
and wherein the phenol compound is phenol or alkyl phenol.

2. The rubber composition according to claim 1,wherein the modified lignin derivative is obtained by modification using 0.01 to 300 parts by weight of the plant-derived compound with respect to 100 parts by weight of the lignin derivative.

3. The rubber composition according to claims 1 or 2,
wherein the lignin derivative has a number average molecular weight of 200 to 5000 expressed in terms of polystyrene, determined by gel permeation chromatography (GPC) analysis.

4. The rubber composition according to any one of claims 1 to3,
wherein the lignin derivative has a softening point of 200 °C or below.

5. The rubber composition according to anyone of claims 1 to 4, further containing a filler.

6. The rubber composition according to claim 5,
wherein the filler contains at least one selected from the group consisting of at least carbon black, silica, alumina, and cellulose fiber.

7. A cured article obtained by curing the rubber composition according to any one of claims 1 to 6.

8. A molding material containing
a modified lignin derivative obtained by modifying a lignin derivative with a plant-derived compound and a phenol compound,
wherein the plant-derived compound is a substance containing a phenol structure,
wherein the plant-derived compound containing a phenol structure includes at least one selected from cashew oil, sumac extract, cardanol, cardol, methyl cardol, anacardic acid, urushiol, laccol, thitsiol, and purification products of the same,
and wherein the phenol compound is phenol or alkyl phenol.

**Patentansprüche**

1. Kautschukzusammensetzung, umfassend ein modifiziertes Ligninderivat, das durch Modifizieren eines Ligninderivats mit einer pflanzlichen Verbindung und einer Phenolverbindung erhalten wird, und dienbasierten Kautschuk,
wobei die pflanzliche Verbindung eine Substanz ist, die eine Phenolstruktur enthält,
wobei die pflanzliche Verbindung, die eine Phenolstruktur enthält, zumindest eines beinhaltet, das aus Cashewnussöl, Sumachextrakt, Cardanol, Cardol, Methylcardol, Anacardiumsäure, Urushiol, Laccol, Thitsiol und Reinigungsprodukten derselben ausgewählt ist, und wobei die Phenolverbindung Phenol oder Alkyphenol ist.

2. Kautschukzusammensetzung nach Anspruch 1, wobei das modifizierte Ligninderivat durch Modifikation unter Benutzung von 0,01 bis 300 Gewichtsteilen der pflanzlichen Verbindung bezüglich 100 Gewichtsteilen des Ligninderivats erhalten wird.

3. Kautschukzusammensetzung nach einem der Ansprüche 1 oder 2,
wobei das Ligninderivat ein Zahlendurchschnittsmolekulargewicht von 200 bis 5000 aufweist, ausgedrückt in Form von Polystyrol, bestimmt durch Gelpermeationschromatografie- (GPC-) Analyse.

4. Kautschukzusammensetzung nach einem der Ansprüche 1 bis 3,

wobei das Ligninderivat einen Erweichungspunkt von 200 °C oder darunter aufweist.

5. Kautschukzusammensetzung nach einem der Ansprüche 1 bis 4, ferner enthaltend einen Füllstoff.

6. Kautschukzusammensetzung nach Anspruch 5,
wobei der Füllstoff zumindest eines enthält, das aus der Gruppe ausgewählt ist, die zumindest aus Ruß, Siliziumdioxid, Aluminiumoxid und Zellulosefaser besteht.

7. Gehärteter Gegenstand, der durch Härten der Kautschukzusammensetzung gemäß einem der Ansprüche 1 bis 6 erhalten wird.

8. Formmaterial, enthaltend
ein modifiziertes Ligninderivat, das durch Modifizieren eines Ligninderivats mit einer pflanzlichen Verbindung und einer Phenolverbindung erhalten wird,
wobei die pflanzliche Verbindung eine Substanz ist, die eine Phenolstruktur enthält,
wobei die pflanzliche Verbindung, die eine Phenolstruktur enthält, zumindest eines beinhaltet, das aus Cashewnussöl, Sumachextrakt, Cardanol, Cardol, Methylcardol, Anacardiumsäure, Urushiol, Laccol, Thitsiol und Reinigungsprodukten derselben ausgewählt ist,
und wobei die Phenolverbindung Phenol oder Alkyphenol ist.

**Revendications**

1. Une composition de caoutchouc comprenant
un dérivé de lignine modifié obtenu en modifiant un dérivé de la lignine avec un composé dérivé d'une plante et un composé de phénol, et
un caoutchouc à base de diène,
dans laquelle le composé dérivé de plante est une substance contenant une structure de phénol,
dans laquelle le composé dérivé de plante contenant une structure de phénol contient au moins l'un choisi parmi l'huile de noix de cajou, l'extrait de sumac, le cardanol, le cardol, le méthylcardol, l'acide anacardique, l'urushiol, le laccol, le thitsiol et les produits de purification de ceux-ci,
et dans laquelle le composé de phénol est le phénol ou un alkylphénol.

2. La composition de caoutchouc selon la revendication 1, dans laquelle le dérivé de lignine modifié est obtenu par modification en utilisant 0,01 à 300 parties en poids du composé dérivé de plante par rapport à 100 parties en poids du dérivé de lignine.

3. La composition de caoutchouc selon les revendications 1 ou 2,
dans laquelle le dérivé de lignine a un poids moléculaire moyen en nombre de 200 à 5000 exprimé en termes de polystyrène, déterminé par analyse par chromatographie par perméation de gel (GPC).

4. La composition de caoutchouc selon l'une quelconque des revendications 1 à 3,
dans laquelle le dérivé de lignine a un point de ramollissement de 200° C ou moins.

5. La composition de caoutchouc selon l'une quelconque des revendications 1 à 4, contenant en outre une charge.

6. La composition de caoutchouc selon la revendication 5,
dans laquelle la charge contient au moins une charge choisie parmi le groupe constitué au moins par le noir de carbone, la silice, l'alumine et la fibre de cellulose.

7. Un article durci obtenu en durcissant la composition de caoutchouc selon l'une quelconque des revendications 1 à 6.

8. Un matériau à mouler contenant un dérivé de lignine modifié obtenu en modifiant un dérivé de la lignine avec un composé dérivé d'une plante et un composé de phénol, et
un caoutchouc à base de diène,
dans lequel le composé dérivé de plante est une substance contenant une structure de phénol,
et dans lequel le composé dérivé de plante et contenant une structure de phénol contient au moins l'un choisi parmi l'huile de noix de cajou, l'extrait de sumac, le cardanol, le cardol, le méthylcardol, l'acide anacardique, l'urushiol, le

laccol, le thitsiol et les produits de purification de ceux-ci,
et dans lequel le composé de phénol est le phénol ou un alkylphénol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011522085 T
- JP 2008285626 A
- JP 2012229330 T
- JP 2004352978 A